# EUROPEAN PATENT SPECIFICATION

(11) **EP 2 261 145 B1**
(45) Date of publication and mention of the grant of the patent: **14.03.2012**
(21) Application number: 10163385.7
(22) Date of filing: 20.05.2010
(51) Int. Cl.: B65G 49/06

(54) **Apparatus for handling glass sheets**
Vorrichtung zum Handhaben von Glasscheiben
Appareil de manipulation de feuilles de verre

(30) Priority: 08.06.2009 IT MI20090999
(43) Date of publication of application: 15.12.2010
(73) Proprietor: Officine Mistrello S.r.l., 35040 Ponso (Padova) (IT)
(72) Inventor: Mistrello, Marco, 35040 Ponso (PD) (IT); Aldegheri, Matteo, 35045 Ospedaletto Euganeo (PD) (IT)
(74) Representative: Perani, Aurelio

(56) References cited:
- EP-A1- 1 695 928
- EP-A1- 2 070 848
- US-A- 5 256 030
- US-A- 5 980 197
- US-A1- 2001 028 837

## Description

The present invention relates to an apparatus for handling sheets, preferably large flat glass sheets as defined in the preamble of claim 1.

Such type of apparatus is used in industrial factories for handling glass sheets, e.g. for transferring the sheets from magazine areas to cutting stations and/or for picking up the cut sheets from the cutting stations to carry them to storage areas.

Glass sheets are generally produced in standard 6000x3210 sizes, with thicknesses ranging from 2 to 22 mm, and are arranged in sheet packs and stored edgewise on stands or racks slightly inclined to the vertical.

Each pack has at least one first sheet providing front access by the sheet handling apparatus that is designed to pick it up.

In the field of sheet storage, it is further known to interpose one or more spacers in a sheet pack for spacing and separating two sheets, or to introduce such spacers to separate two glass sheet packs. The spacers are associated with the sheets by adhesives and the like by form fit with the edges of the glass sheets. In any case, the spacers should be allowed to be easily removed from the sheets. Indeed, any time a glass sheet has to be handled, any spacers associated therewith need to be removed. Therefore, the presence of spacers is an obstacle to glass sheet handling.

Glass sheet handling apparatus with spacer removing means are known in the art.

For example, US 5,256,030 discloses a sheet handling apparatus comprising a lattice frame with suction pads mounted thereto for engaging and removably holding a sheet. Such suction pads are adapted to define a pick-up surface.

The apparatus also has removal means fixed above the frame and adapted to operate on the sheet to remove one or more spacers from the surface of the sheet.

Each removal means comprises an electromagnetic winding and has a flat face at the end of the removal means. The removal means is supported by a cylinder that is adapted to be moved in a direction perpendicular to the pick-up surface and is supported by a frame-mounted piston, which is adapted to reciprocate the cylinder for the removal means to operate on the spacer and remove it.

While the apparatus can remove spacers from a sheet, it still has the drawback of being only able to remove such spacers when they are fixed to the sheet in preset positions. If a different type of spacer is used, which has an unknown position on the sheet, the spacer removing means are totally ineffective.

This prior art apparatus is poorly adaptable to the various conditions in which the glass sheets are stored in packs, which may include, for instance, vertically arranged elongate cardboard spacers whose position may not always be known beforehand.

An other type of apparatus for handling glass sheets is also described in EP 2 070 848 A1.

In view of the above, the need arises for a sheet handling apparatus that can quickly and easily remove spacers that are fixed to the sheet in any position.

Therefore, the object of the present invention is to provide a sheet handling apparatus that has such structural and functional features as to fulfill the above needs, while obviating the drawbacks of prior art.

This object is fulfilled by a sheet handling apparatus as defined in claim 1.

Further characteristics and advantages of the sheet handling apparatus of the present invention will be apparent from the following description of preferred embodiments thereof, which are given by way of illustration and without limitation with reference to the accompanying figures, in which:
- Figure 1 is a front view of a configuration of the apparatus of the invention, in which the removal means are in the rest position,
- Figure 2 is a front view of a configuration of the apparatus of the invention, in which the removal means are in the operating position,
- Figures 3 and 4 are a front views of a post of the apparatus of Figures 1 and 2 respectively,
- Figure 5 is a front view of the apparatus of Figure 1 interleaved with a tilt table,
- Figure 6 is a side view of a configuration of the apparatus of the invention, in which the removal means are in a forward operating position,

Referring to the annexed figures, numeral 100 generally designates a handling apparatus for sheets 3 according to the present invention, preferably for large glass sheets.

As used herein, the term "large glass sheet" is intended to designate a glass sheet having a surface area of at least 5 m².

In the illustrated embodiments, the glass sheet 3 is a flat glass sheet having a surface area of 6000 x 3210 mm and a thickness of 15 mm.

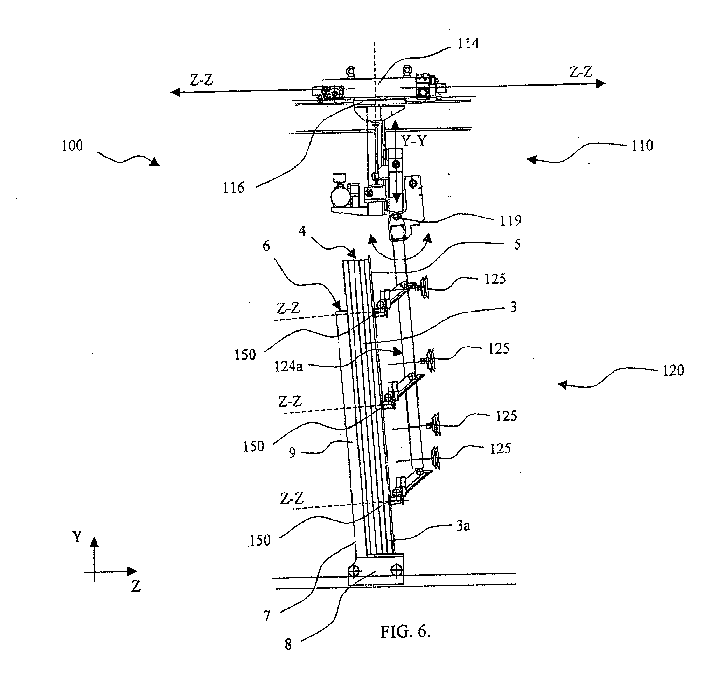

As shown in the example of Figure 6, the sheets 3 are stored on support means 6, such as stands 7 or racks.

The stand 7 is adapted to support a plurality of glass sheets 3 or packs 4 composed of a plurality of glass sheets 3.

The stand 7 includes a support base 8 for the sheets 3 or packs 4, oriented substantially parallel to a plane of installation of the stand 7, and a back 9 oriented substantially perpendicular to the support base 8, with an inclined bearing side for said sheets 3 and/or packs 4.

The pack 4 supported by the stand 7 has a first sheet 3a in an outermost position relative to the other glass sheets 3. The first outermost sheet 3a defines the front side of the pack 4 and can thus be directly accessed by the apparatus 100 for handling the sheets 3, to be selectively picked up from the pack 4.

The glass sheets 3 are picked up from the pack 4 by separating the first sheet 3a from the other glass sheets 3 of the pack 4.

In one embodiment, the apparatus 100 is of the overhead crane type.

The apparatus 100 comprises pick-up means 120 for picking up the sheets 3, which are adapted to engage the front of the sheet 3 and handling means 110.

Preferably, the pick-up means 120 are adapted to engage the front of the first sheet 3a.

The handling means 110 support the pick-up means 120 and are adapted to handle and orient the pick-up means 120 to set their position against the front side of the sheet 3 or pack 4 of sheets 3.

The handling means 110 include a support crossbar 112.

The support crossbar 112 is adapted to slide on rails mounted in a magazine. The rails may be mounted on a horizontal installation plane X-Z, i.e. substantially parallel to the magazine floor, or may be overhead rails located at a predetermined height in the magazine.

The support crossbar 112 slides in a direction of extension of the magazine, e.g. a direction Z-Z parallel to the installation plane X-Z.

The handling means 110 include a motor-driven slide 114 supported by the crossbar 112.

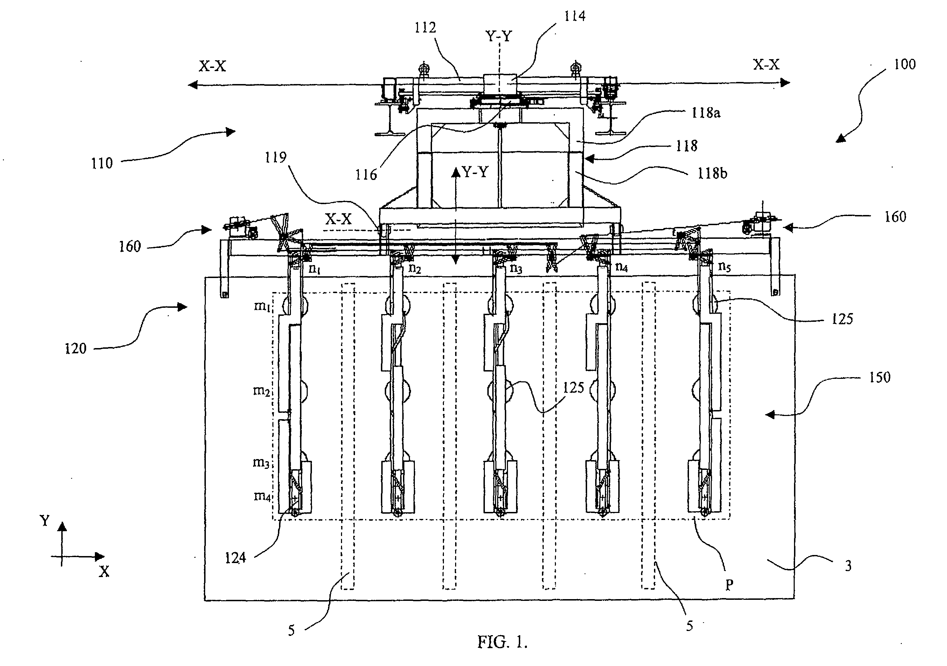

As shown in the examples of figures 1, 2 and 6, the motor-driven slide 114 is adapted to translate relative to the support crossbar 112 in a direction X-X transverse to the direction of extension Z-Z of the magazine. For this purpose, the motor-driven slide 114 is driven by common motor means.

In an alternative embodiment, as shown in the example of Figure 6, the motor-driven slide 114 may slide directly on the rails of the magazine in the direction of extension of the magazine. Therefore, in this embodiment, the support crossbar 112 may not be required in the apparatus 100.

The handling means 110 include rotating means 116 supported by the motor-driven slide 114. The rotating means 116 are adapted to rotate about an axis of rotation Y-Y substantially perpendicular to the installation plane X-Z. The rotating means 116 are, for instance, in the form of a fifth wheel, but may also comprise other rotating devices suitable for the purpose.

The handling means 110 include sliding means 118 supported by the rotating means 116 and adapted for moving the pick-up means 120 in a direction Y-Y perpendicular to the installation plane X-Z. Particularly, the sliding means 118 include an inverted U-shaped subframe 118a. An additional subframe 118b may slide on the subframe 118a. Particularly, the vertical portions of the subframe 118b may slide on the vertical portions of the subframe 118a.

In one embodiment, the sliding means 118 support the pick-up means 120 by hinge connection means 119, which are adapted to allow the pick-up means 120 to rotate about an axis of rotation X-X substantially perpendicular to said axis of rotation Y-Y and at the same time to tilt, i.e. to change the inclination of the pick-up means 120 to the support crossbar 112.

The pick-up means 120 for picking up the sheets 3 are movable relative to said support means 6 and adapted to engage the front of the sheet 3.

The pick-up means 120 include a frame 122 having at least one post 124 with suction pads 125 associated therewith to engage and removably hold a sheet 3.

The frame 122 includes a crossbar 123 with a plurality of posts 124 extending therefrom.

In one embodiment, the posts 124 extend transversely from the crossbar 123.

In the embodiment of Figures 1, 2 and 5, the crossbar 123 extends along a horizontal direction X-X relative to the installation plane X-Y and the posts 124 extend longitudinally in a direction Y-Y perpendicular to the crossbar 123 toward the installation plane X-Z.

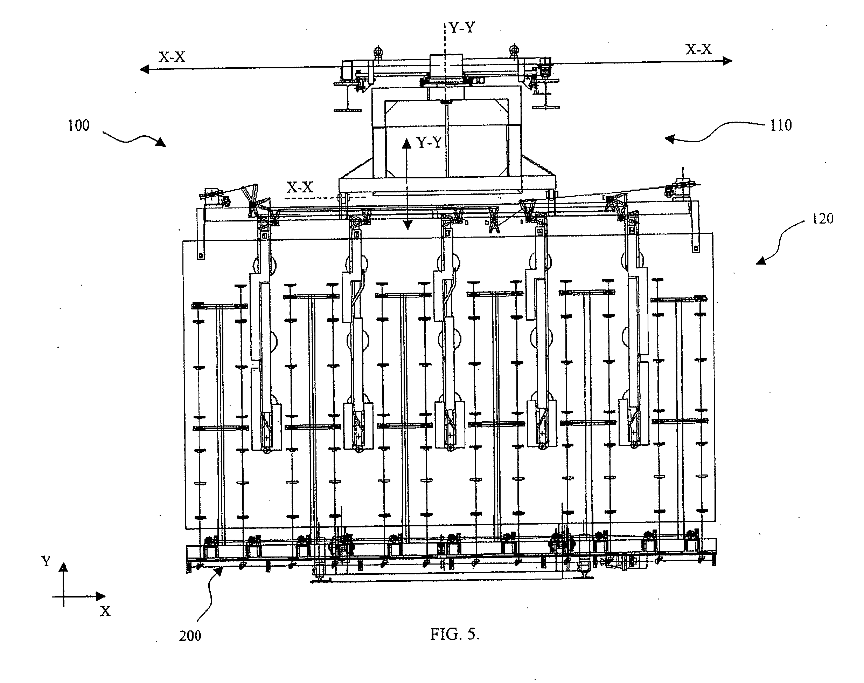

Preferably, the posts 124 and the crossbar 123 form a comb-like more preferably downwardly open structure. This configuration allows the apparatus 100 to cooperate with prior art support devices which have a mating upwardly open comb-like structure, such as the comb-like tilt table designated by numeral 200 in Figure 5. The intersection of the tilt table 200 and the frame 122 allows a glass sheet 3 to be transferred by always handling it on the same side. This is particularly important for handling low-emissivity glass sheets, which have one film of a special material (typically metal oxides) on one surface thereof. Such sheets should be always handled from the side opposite to the side with that material, for the properties of these sheets to be unaffected.

Preferably, the suction pads 125 are suction cups formed as is known in the art.

The suction pads 125 are supported by the posts 124.

It shall be noted that one or more suction pads 125 define a pick-up surface P. The pick-up surface P may be defined as the adhesion surface of a suction pad 125.

The pick-up surface P, of two or more suction pads 125 are provided, is the surface whose apices are substantially defined by a plurality of suction pads 125 located external to other suction pads 125. Particularly, the pick-up surface P is defined by the envelope of the suction pads 125.

Preferably, the suction pads 125 are coplanar, all of them defining the pick-up surface P.

The pick-up surface P extends over a plane X-Y. Preferably, during handling of the apparatus 100, the pick-up surface P will extend over a plane X-Y substantially perpendicular to the installation plane X-Y. Thus advantageously, the sheets 3 are handled edgewise to prevent deflections of the sheet 3 caused by its weight.

In the example of Figure 1, the pick-up surface is defined by the broken line designated by letter P. In this example, the pick-up surface P is substantially outlined by a rectangular.

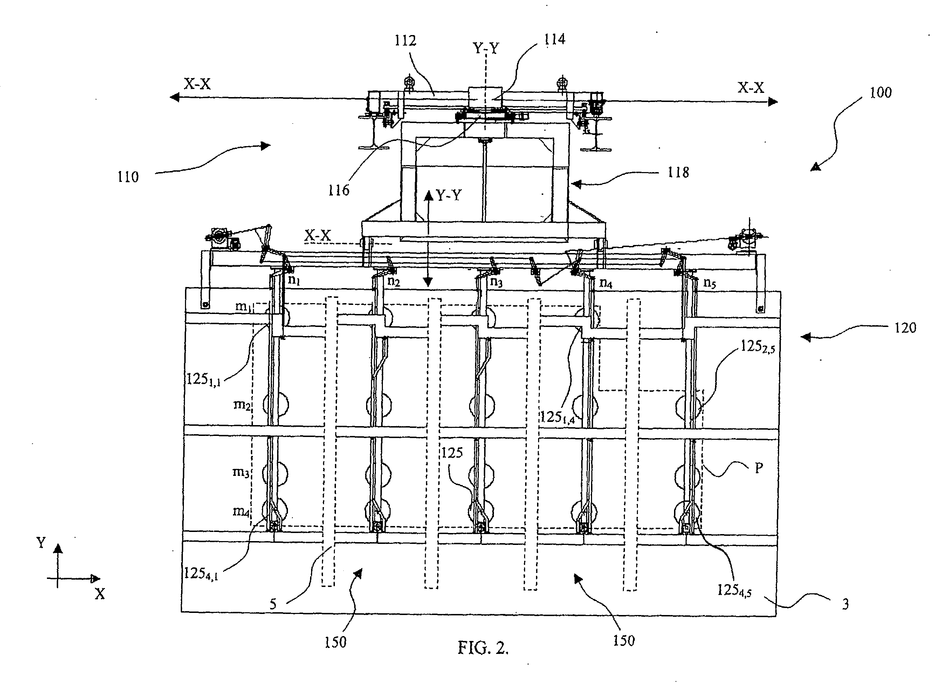

In the example of Figure 2, the apparatus 100 comprises eighteen suction pads 125 in a matrix arrangement of four horizontal lines m₁,m₂,m₃,m₄, and five vertical columns n₁,n₂,n₃,n₄,n₅. The suction pads 125 of each column n₁,n₂,n₃,n₄,n₅are supported by a common post 124.

Considering the suction pads 125 as matrix elements, the broken line P defines the perimeter of the pick-up surface which, in the example of Figure 2 is substantially external to the suction pad 125_{1,1} located in the first line m₁ and the first column n₁, to the suction pad 125_{1,4} located in the first line m₁ and the fourth column n₄, to the suction pad 125_{2,5} located in the second line m₂ and the fifth column n₅, to the suction pad 125_{4,5} located in the fourth line m₄ and the fifth column n₅, and to the suction pad 125_{4,1} located in the fourth line m₄ and the first column n₁.

It shall be noted that at least one spacer 5 may be associated with one of the larger surfaces of a sheet 3, or one or more spacers 5 may be interposed between some of sheets 3 that form the pack 4, for spacing and separating two or more sheets 3 while preventing them from being in contact all along their main surface.

As shown in the example of Figures 1 and 2, the spacer 5 may be embodied as a strip or block of any material, generally polystyrene or cardboard, to be applied to one of the larger surface of the sheet 3. In the example of Figures 1 and 2, the spacer 5 extends substantially vertically with respect to the width of the larger surface of the plate 3.

One of the surfaces of the spacer 5 is adhesive, for removable attachment thereof to the surface of a sheet 3. Alternatively, the spacer 5 may be joined to the surface of the sheet 3 by a double-sided adhesive tape, or suitably shaped spacers may be designed to allow form fit with a peripheral portion of the glass sheet 3 with which they are designed to be associated.

In order to remove one or more spacers 5 from the surface of the sheet 3, the apparatus 100 is equipped with removal means 150 adapted to operate on the sheet 3.

The apparatus 100 also comprises drive means 160 connected to the removal means 150 to drive the removal means 150.

Advantageously, the removal means 150 are supported by at least one post 124..

Advantageously, the removal means 150 are reversibly movable from a rest position to an operating position.

In the rest position, the removal means 150 are located substantially at the post 124.

In the operating position, the removal means 150 overhang the post 124 so that the projection of the removal means 150 on an axis transverse to the longitudinal direction Y-Y on the rest position is smaller than the projection of the removal means 150 in the operating position.

Thus, in the operating position, the removal means 150 reach a point located at a distance from the axis of the post 124 that is larger than the maximum distance point reached by the removal means 150 in the rest position.

As used hereinafter and in the annexed claims, the term projection of the removing means 10 is intended to designate the projection of the removal means 150 that can be represented on an axis transverse to the longitudinal direction Y-Y of extension of the post 126 with which the removal means 150 are associated.

Advantageously, the projection of the removal means 150 in the rest position is smaller than the projection of the same removal means 150 in the operating position.

It shall be noted that, in the rest position, the removal means 150 do not hinder the usual steps of handling and/or picking up the sheets 3 from the magazine. Particularly, as shown in Figure 5, in the rest position the removal means 150 are located at the posts 124 and allow easy interleaving of the comb-like tilt table 200 in the frame 122 of the apparatus 100.

An additional advantage of the apparatus 100 is that, in the operating position, the projection of the removal means 150 over said transverse axis is larger than the projection the same removal means 150 over said transverse axis in the rest position, thereby allowing removal of spacers 5 fixed to the sheet 3 in any position on the sheet.

In one embodiment, in the rest position, the removal means 150 are supported by the post 125 behind the pick-up surface P, so that they do not extend beyond the pick-up surface P. Thus, advantageously, the removal means 150 do not hinder picking up of the sheets 3.

In one embodiment, in the rest position, the removal means 150 are located between the post 124 and the pick-up surface P.

In a further embodiment, in the rest position, the removal means 150 are supported at the side 124a of the post 124 opposite to the post 124 facing toward the pick-up surface P.

In a further embodiment, in the rest position, the removal means 150 are supported at the side of the post 124 facing toward the pick-up surface P.

It shall be noted that the removal means 150 may be arranged either on a face of the frame 122 opposite to that with the suction pads 125 or, in an alternative embodiment, the removal means 150 may be arranged on the same face of the frame 122 with the suction pads 125. It shall be noted that suction pads 125 might be provided on both faces of the frame 122.

In one embodiment, in the operating position, the removal means 150 extend, as a whole, over a length substantially equal to or greater than the width of the pick-up surface P.

As shown in the annexed figures, the apparatus 100 comprises a plurality of posts 124 each adapted to support at least one removal means 150.

In the particular example of Figures 1, 2 or 5, the apparatus 100 comprises five posts 124, each post 124 supporting three removal means 150, amounting to fifteen removal means 150.

In one embodiment, in the operating position, the removal means 150 extend, as a whole, over a length substantially equal to or greater than the width of the pick-up surface P. Thus, the apparatus 100 of the invention allows removal of spacers 5 attached to the sheet 3 in any position of the sheet.

Advantageously, the movement of the removal means 150 between the rest position and the operating position has a component of rotation about an axis of rotation Z-Z substantially perpendicular to the pick-up surface P. Particularly, such movement consists of a rotation about the axis of rotation Z-Z.

The removal means 150 may rotate about the axis Z-Z either clockwise and counter-clockwise, in either synchronized or alternate manner. Thus, for instance, some of the removal means 150 may be rotated while other removal means 150 are held stationary.

Preferably, the axes of rotation Z-Z of a plurality of removal means 150 are in parallel aligned relation.

Preferably, the axis of rotation Z-Z of a removal means 150 supported by a post 124 is substantially horizontally aligned with the axis of rotation Z-Z of a corresponding removal means 150 supported by a post 124 adjacent thereto.

The removal means 150 include an arm adapted to interfere with one or more spacers 5. Each arm has a plurality of removal teeth and/or hooks, which are designed to at least partially perforate one or more spacers 5.

In one embodiment, the teeth and/or hooks are supported in one of the larger surfaces of each arm.

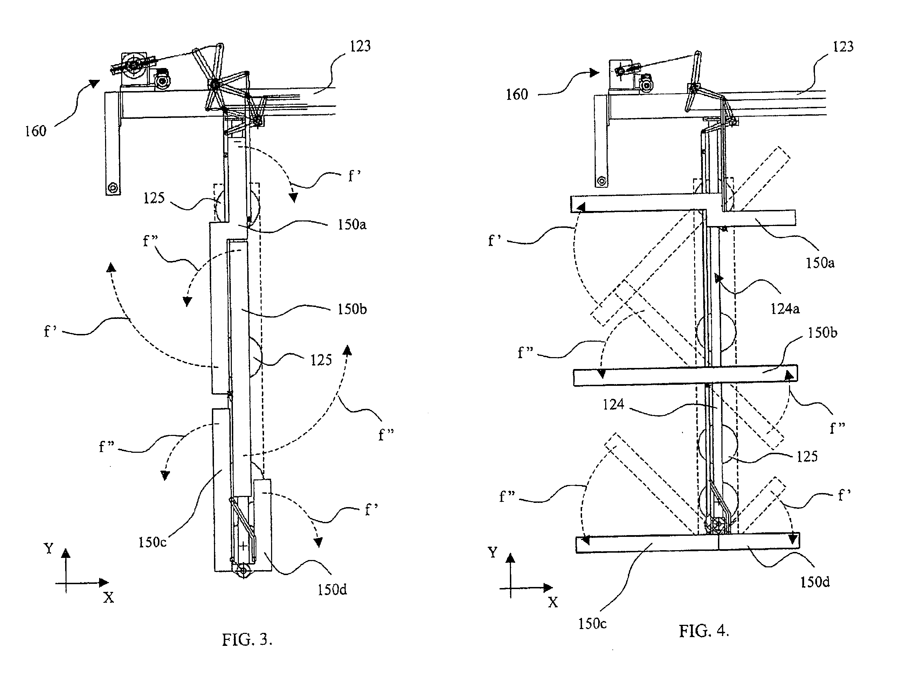

Referring to the embodiments of Figures 3 and 4, four removal means 150a,150b,150c,150d are shown, which are supported by one common post 124 on the side 124a opposite to the side facing toward the pick-up surface P.

Preferably, the first 150a and fourth removal means 154c are adapted to rotate clockwise as shown by broken-line arrows f'.

Preferably, the second 150b and third removal means 150c are adapted to rotate clockwise as shown by broken-line arrows f''.

In a preferred embodiment, each of the removal means 150b,150c,150d includes a substantially rectangular arm.

In the embodiment as shown in the examples of Figures 3 and 4, the first removal means 150a includes an arm having the shape of two inverted Ls, one above the other.

As shown in Figure 4, in the rest position, the first removal means 150a is at least partially aligned over the side 124a of the post 124. In such rest position, the second removal means 150a is entirely aligned over the side 124a of the post 124. In the rest position, the third 150c and the fourth removal means 150d are laterally and vertically aligned with the post 124.

It shall be noted that the removal means 150 are reversibly movable from the rest position to the operating position, to transversely overhang the post 124.

In the example of Figure 4, in the operating position, the removal means 150a,150b,150c,150d are oriented transverse to the post 124.

In one embodiment, the drive means 160 are adapted to move the removal means 150 in a direction Z-Z perpendicular to the pick-up surface P. Thus, the removal means 150 are reversibly movable from a retracted position to a forward position.

In the retracted position, the removal means 150 are retracted from the pick-up surface P.

In the forward position, the removal means 150 extend beyond the pick-up surface P to project from the front of the pick-up surface P.

In an alternative embodiment, in the forward position, the removal means 150 are supported by the post 124 to be retracted from the pick-up surface P. In the example of Figure 6, the removal means 150 are in the forward operating configuration, to be retracted from the pick-up surface P.

Advantageously, the drive means 160 include motor means connected to gearmotor means to transfer motion to the removal means 150, which are formed in accordance with known techniques.

In a preferred embodiment, the drive means 160 transfer motion to all the removal means 150 at the same time.

Advantageously, the apparatus 100 is equipped with position sensor means (not shown), which detect the position of the sheet 3 when it is stored on the support means 6. Thus, the handling means 110 allow the pick-up means 120 to be oriented to the proper position for handling the sheet 3. The position sensor means may be also adapted to detect the position of spacers 5 associated with the sheet 3, thereby allowing, the handling means 110 to properly orient the apparatus 100 to act upon the sheet 3 and remove the spacers 5.

It shall be noted that the handling means 110, the drive means 160 and the suction means associated with the suction pads 125 are controlled by appropriate control means, e.g. electronic control means. These means are formed in accordance with per se known techniques and will not be further described herein.

As clearly shown in the above description, the sheet handling apparatus of the present invention fulfills the needs and obviates drawbacks of the prior art as set out in the introduction of this disclosure.

Those skilled in the art will obviously appreciate that a number of changes and variants may be made to the sheet handling apparatus of the invention as described hereinbefore to meet specific needs, without departure from the scope of the invention, as defined in the following claims. For instance, the removal means 150 may be formed of various shapes and sizes. Otherwise, for example, each post 124 may support one or more removal means 150 and these removal means 150 may be located in any position along the post 124. Also, the removal means 150 may be formed according to any of the above embodiments whatever.

## Claims

1. An apparatus (100) for handling large sheets (3), wherein at least one sheet (3) is supported by support means (6) and wherein at least one spacer (5) is designed to be associated with one of the larger surfaces of said sheet (3), said apparatus (100) for handling sheets (3) comprising:
- pick-up means (120) for sheet (3) movable relative to said support means (6) and adapted to engage the front of said sheet (3),
- handling means (110) for handling and orienting said pick-up means (120) to set the position of said pick-up means (120) against the front side of said sheet (3),
- removal means (150) adapted to operate on said sheet (3) to remove said at least one spacer (5) from said sheet (3),
- drive means (160) for driving said removal means (150),
wherein said pick-up means (120) for picking up said sheet (3) include at least one post (124) extending in a longitudinal direction (Y-Y), said post (124) supporting suction cups (125) which define a pick-up surface (P) and are designed to engage and removably hold said sheet (3),
**characterized in that** said removal means (150) are supported by said at least one post (124) to be reversibly movable from a rest position, in which said removal means (150) are located substantially in correspondence of said at least one post (124), to an operating position, in which said removal means (150) overhangs from said at least one post (124) so that the projection of said removal means (150) on an axis transverse to the longitudinal direction (Y-Y) of extension of said at least one post (124), in said rest position, is smaller than the projection of said removal means (150) in said operating position.

2. An apparatus (100) as claimed in claim 1, wherein in said rest position, said removal means (150) are supported by said at least one post (124) in a backward position relative to said pick-up surface (P).

3. An apparatus (100) as claimed in claim 1 or 2, wherein in said rest position, said removal means (150) are located between said at least one post (124) and said pick-up surface (P).

4. An apparatus (100) as claimed in any one of claims 1 to 3, wherein in said rest position, said removal means (150) are supported in correspondence of the side (124a) of said at least one post (124) which is opposite to the side (124b) of the post (124) facing towards the pick-up surface (P).

5. An apparatus (100) as claimed in any one of claims 1 to 4, wherein in said operating position, said removal means (150), as a whole, extend along a length substantially larger than or equal to the width of said pick-up surface (P).

6. An apparatus (100) as claimed in any one of claims 1 to 5, comprising a plurality of posts (124), each post (124) supporting at least one removal means (150) wherein, in said operating position, said removal means (150) supported by said posts (124) extend, as a whole, along a length substantially larger than or equal to the width of said pick-up surface (P).

7. An apparatus (100) as claimed in any one of claims 1 to 6, wherein the movement of said removal means (150) between said rest position and said operating position has a component of rotation about a rotation axis (Z-Z) substantially perpendicular to said pick-up surface (P).

8. An apparatus (100) as claimed in claim 7, wherein the movement consists of a rotation about said rotation axis (Z-Z) substantially perpendicular to said pick-up surface (P).

9. An apparatus (100) as claimed in any one of claims 1 to 8, wherein said drive means (160) are adapted to move said removal means (150) in a direction (Z-Z) perpendicular to said pick-up surface (P), said removal means (150) being reversibly movable from a backward position, in which said removal means (150) are retracted relative to said pick-up surface (P), to a forward position, in which said removal means (150) extend beyond said pick-up surface (P) so that they project out of the front of said pick-up surface (P).

10. An apparatus (100) as claimed in any one of claims 1 to 9, wherein said removal means (150) include a mechanical arm adapted to interfere with said at least one spacer (5), said mechanical arm comprising a plurality of removal teeth and/or hooks adapted to at least partially perforate said at least one spacer (5).

## Patentansprüche

1. Vorrichtung (100) zum Handhaben von großen Scheiben (3), wobei mindestens eine Scheibe (3) durch Abstützmittel (6) gestützt wird und wobei mindestens ein Abstandhalter (5) dazu ausgestaltet ist, mit einer der größeren Oberflächen der Scheibe (3) verbunden zu werden, wobei die Vorrichtung (100) zum Handhaben von Scheiben (3) umfaßt:
- Aufnahmemittel (120) für die Scheibe (3), welche relativ zu den Abstützmitteln (6) beweglich und dazu ausgelegt sind, die Vorderseite der Scheibe (3) zu belegen,
- Handhabemittel (110) zum Handhaben und Ausrichten der Aufnahmemittel (120), um die Position der Aufnahmemittel (120) gegenüber der Vorderseite der Scheibe (3) festzulegen,
- Abnahmemittel (150), die dazu ausgelegt sind, auf die Scheibe (3) einzuwirken, um den mindestens einen Abstandshalter (5) von der Scheibe (3) zu entfernen,
- Antriebsmittel (160) zum Bewegen der Abnahmemittel (150),
wobei die Aufnahmemittel (120) zum Aufnehmen der Scheibe (3) mindestens eine sich in eine Längsrichtung (Y-Y) erstreckende Stütze (124) umfassen, wobei die Stütze (124) Saugnäpfe (125) trägt, welche eine Aufnahmefläche (P) festlegen und dazu ausgelegt sind, die Scheibe (3) zu belegen und abnehmbar zu halten,
**dadurch gekennzeichnet, daß** die Abnahmemittel (150) durch die mindestens eine Stütze (124) gestützt werden, um von einer Ruhestellung, in welcher die Abnahmemittel (150) im wesentlichen in Übereinstimmung mit der mindestens einen Stütze (124) angeordnet sind, in eine Arbeitsstellung, in welcher die Abnahmemittel (150) von der mindestens einen Stütze (124) überhängen, umkehrbar beweglich zu sein, so daß der Überstand der Abnahmemittel (150) an einer Achse, die quer zur Erstreckungslängsrichtung (Y-Y) der mindestens einen Stütze (124) ausgerichtet ist, in der Ruhestellung kleiner als der Überhang der Abnahmemittel (150) in der Arbeitsstellung ist.

2. Vorrichtung (100) nach Anspruch 1, wobei die Abnahmemittel (150) in der Ruhestellung durch die mindestens eine Stütze (124) in einer relativ zur Aufnahmeoberfläche (P) rückgewandten Position gestützt werden.

3. Vorrichtung (100) nach Anspruch 1 oder 2, wobei die Abnahmemittel (150) in der Ruhestellung zwischen der mindestens einen Stütze (124) und der Aufnahmeoberfläche (P) angeordnet sind.

4. Vorrichtung (100) nach einem der Ansprüche 1 bis 3, wobei die Abnahmemittel (150) in der Ruhestellung in Übereinstimmung mit der Seite (124a) der mindestens einen Stütze (124), welche gegenüber der der Aufnahmeoberfläche (P) zugewandten Seite (124b) der Stütze (124) liegt, gestützt werden.

5. Vorrichtung (100) nach einem der Ansprüche 1 bis 4, wobei die Abnahmemittel (150) in der Arbeitsstellung sich im Ganzen über eine Länge erstrecken, die im wesentlichen länger als oder gleich der Breite der Aufnahmeoberfläche (P) ist.

6. Vorrichtung (100) nach einem der Ansprüche 1 bis 5, umfassend mehrere Stützen (124), wobei jede Stütze (124) mindestens ein Abnahmemittel (150) stützt, wobei die Abnahmemittel (150), die durch die Stützen (124) gestützt werden, sich in der Arbeitsstellung im Ganzen über eine Länge erstrecken, die im wesentlichen länger als oder gleich der Breite der Aufnahmeoberfläche (P) ist.

7. Vorrichtung (100) nach einem der Ansprüche 1 bis 6, wobei die Bewegung der Abnahmemittel (150) zwischen der Ruhestellung und der Arbeitsstellung eine Rotationskomponente um eine Rotationsachse (Z-Z) aufweist, die im wesentlichen senkrecht zur Aufnahmeoberfläche (P) ist.

8. Vorrichtung (100) nach Anspruch 7, wobei die Bewegung aus einer Rotation um die Rotationsachse (Z-Z) besteht, die im wesentlichen senkrecht zur Aufnahmeoberfläche (P) ist.

9. Vorrichtung (100) nach einem der Ansprüche 1 bis 8, wobei die Antriebsmittel (160) dazu ausgelegt sind, die Abnahmemittel (150) in eine Richtung (Z-Z) zu bewegen, die senkrecht zur Aufnahmeoberfläche (P) ist, wobei die Abnahmemittel (150) von einer Rückwärtsposition, in welcher die Abnahmemittel (150) relativ zur Aufnahmeoberfläche (P) eingezogen sind, in eine Vorwärtsposition, in welcher sich die Abnahmemittel (150) über die Aufnahmeoberfläche (P) hinaus erstrecken, umkehrbar beweglich sind, so daß sie aus der Vorderseite der Aufnahmeoberfläche (P) hervorstehen.

10. Vorrichtung (100) nach einem der Ansprüche 1 bis 9, wobei die Abnahmemittel (150) einen mechanischen Arm, der dazu ausgelegt ist, mit dem mindestens einen Abstandshalter (5) zu interferieren, beinhalten, wobei der mechanische Arm mehrere Abnahmezähne und/oder Haken umfaßt, die dazu ausgelegt sind, zumindest teilweise den mindestens einen Abstandshalter (5) zu perforieren.

## Revendications

1. Dispositif (100) de manipulation de vitres de grande dimension (3), dans lequel au moins une vitre (3) est supportée par des moyens de support (6) et dans lequel au moins un écarteur (5) est conçu pour être associé à l'une des surfaces plus grandes de la vitre (3), ledit dispositif (100) de manipulation de vitres (3) comprenant:
- des moyens de prise (120) pour la vitre (3) qui sont mobiles par rapport aux moyens de support (6) et adaptés pour venir contre la face avant de la vitre (3),
- des moyens de manipulation (110) pour manipuler et orienter lesdits moyens de prise (120) de manière à déterminer la position des moyens de prise (120) par rapport à la face avant de la vitre (3),
- des moyens d'enlèvement (150) qui sont adaptés pour agir sur ladite vitre (3) de manière à détacher ledit au moins un écarteur (5) de la vitre (3),
- des moyens d'entraînement (160) pour déplacer lesdits moyens d'enlèvement (150),
lesdits moyens de prise (120) pour prendre ladite vitre (3) comprenant au moins un montant (124) s'étendant dans une direction longitudinale (Y-Y), ledit montant (124) supportant des ventouses (125) qui définissent une surface de prise (P) et sont conçues pour venir contre ladite vitre (3) et pour maintenir celle-ci de manière amovible,
**caractérisé par le fait que** lesdits moyens d'enlèvement (150) sont supportés par ledit au moins un montant (124) de manière à être déplaçables de manière réversible depuis une position de repos dans laquelle lesdits moyens d'enlèvement (150) sont disposés pour l'essentiel en correspondance avec ledit au moins un montant (124), vers une position de travail dans laquelle les moyens d'enlèvement (150) sont en saillie par rapport audit au moins un montant (124) de sorte que la saillie des moyens d'enlèvement (150) sur un axe transversal à la direction longitudinale (Y-Y) d'extension dudit au moins un montant (124), dans ladite position de repos, est plus petite que la saillie des moyens d'enlèvement (150) dans la position de travail.

2. Dispositif (100) selon la revendication 1, dans lequel, dans la position de repos, les moyens d'enlèvement (150) sont supportés par ledit au moins un montant (124) dans une position arrière par rapport à la surface de prise (P).

3. Dispositif (100) selon la revendication 1 ou 2, dans lequel, dans la position de repos, les moyens d'enlèvement (150) sont agencés entre ledit au moins un montant (124) et ladite surface de prise (P).

4. Dispositif (100) selon l'une quelconque des revendications 1 à 3, dans lequel, dans la position de repos, lesdits moyens d'enlèvement (150) sont supportés en correspondance avec la face (124a) dudit au moins un montant (124) qui est opposée à la face (124b) du montant (124) tournée vers ladite surface de prise (P).

5. Dispositif (100) selon l'une quelconque des revendications 1 à 4, dans lequel, dans la position de travail, lesdits moyens d'enlèvement (150) s'étendent dans l'ensemble sur une longueur qui est pour l'essentiel supérieure ou égale à la largeur de la surface de prise (P).

6. Dispositif (100) selon l'une quelconque des revendications 1 à 5, comprenant une pluralité de montants (124), chacun des montants (124) supportant au moins un moyen d'enlèvement (150), dans lequel, dans ladite position de travail, les moyens d'enlèvement (150) supportés par lesdits montants (124) s'étendent dans l'ensemble sur une longueur qui est pour l'essentiel supérieure ou égale à la largeur de ladite surface de prise (P).

7. Dispositif (100) selon l'une quelconque des revendications 1 à 6, dans lequel le mouvement des moyens d'enlèvement (150) entre ladite position de repos et ladite position de travail a une composante de rotation autour d'un axe de rotation (Z-Z) pour l'essentiel perpendiculaire à la surface de prise (P).

8. Dispositif (100) selon la revendication 7, dans lequel le mouvement se compose d'une rotation autour de l'axe de rotation (Z-Z) pour l'essentiel perpendiculaire à la surface de prise (P).

9. Dispositif (100) selon l'une quelconque des revendications 1 à 8, dans lequel lesdits moyens d'entraînement (160) sont adaptés pour déplacer les moyens d'enlèvement (150) dans une direction (Z-Z) perpendiculaire à la surface de prise (P), lesdits moyens d'enlèvement (150) étant déplaçables de manière réversible depuis une position arrière dans laquelle les moyens d'enlèvement (150) sont rétractés par rapport à la surface de prise (P), vers une position avant dans laquelle les moyens d'enlèvement (150) s'étendent au-delà de ladite surface de prise (P) de sorte qu'ils sont en saillie par rapport à la face avant de la surface de prise (P).

10. Dispositif (100) selon l'une quelconque des revendications 1 à 9, dans lequel les moyens d'enlèvement (150) intègrent un bras mécanique adapté pour interférer avec ledit au moins un écarteur (5), ledit bras mécanique comprenant une pluralité de dents d'enlèvement et/ou de crochets adaptés pour perforer au moins en partie ledit au moins un écarteur (5).
